# EUROPEAN PATENT SPECIFICATION

(11) **EP 4 086 531 B1**
(45) Date of publication and mention of the grant of the patent: **17.09.2025**
(21) Application number: 20910026.2
(22) Date of filing: 13.11.2020
(51) Int. Cl.: F24F 11/871, F24F 140/20, F24F 11/77, F24F 11/67, F24F 110/10, F24F 110/12, F24F 140/12

(54) **ROTATIONAL SPEED CONTROL METHOD FOR EXTERNAL FAN OF AIR CONDITIONER**
DREHZAHLREGELUNGSVERFAHREN FÜR DEN AUSSENLÜFTER EINER KLIMAANLAGE
PROCÉDÉ DE COMMANDE DE VITESSE DE ROTATION POUR VENTILATEUR EXTERNE DE CLIMATISEUR

(30) Priority: 02.01.2020 CN 202010001179
(43) Date of publication of application: 09.11.2022
(73) Proprietor: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: SONG, Deyue, Qingdao, Shandong 266101 (CN); ZHANG, Ming, Qingdao, Shandong 266101 (CN); ZHANG, Xiaodi, Qingdao, Shandong 266101 (CN); SUN, Mengmeng, Qingdao, Shandong 266101 (CN)
(74) Representative: Budde Schou A/S
(86) International application number: PCT/CN2020/128703
(87) International publication number: WO 2021/135679

(56) References cited:
- EP-A1- 2 320 151
- EP-A1- 2 578 956
- EP-A1- 3 324 133
- CN-A- 102 518 595
- CN-A- 103 759 345
- CN-A- 103 982 990
- CN-A- 107 917 523
- CN-A- 109 883 019
- CN-B- 104 697 106
- JP-A- 2012 122 724

## Description

### FIELD OF THE INVENTION

The present invention relates to the technical field of air conditioning; in particular, the present invention relates to a method for controlling a rotational speed of an external fan of an air conditioner.

### BACKGROUND OF THE INVENTION

At present, rotational speed control of an external fan of an air conditioner is basically based on high and low system pressures or a temperature of an indoor unit coil. In order to achieve the rotational speed control, a DC fan is usually used as the external fan of the air conditioner. During the control process, the rotational speed of the DC fan is adjusted based on the detected system pressure or the detected temperature of the indoor unit coil, so that the rotational speed is adapted to the current system pressure or coil temperature.

For example, Chinese patent publication No. CN109883019A discloses a method and device for controlling an air volume of an air conditioning system. In the present application, an amount of heat exchange between a refrigerant and the environment is reduced by adjusting the settings of the rotational speed of the external fan according to the actual pressure of the system, so as to ensure the reliability and comfort of the air conditioning system. However, in the present application, the rotational speed of the fan is divided into multiple settings for adjustment, whereas in practical applications, in order to facilitate the control, there are usually not too many speed settings provided. Therefore, due to the large rotational speed range of the fan itself of the air conditioner (usually the rotational speed range of the fan is from several hundred revolutions to several thousand revolutions), there will be a large difference in the rotational speed between the speed settings, which will also have a great influence on the high and low pressures of the air conditioning system while adjusting the wind speed, thus being not advantageous for a stable operation of the air conditioning system. Patent document No. EP2320151A discloses another method for controlling a rotational speed of an external fan of an air conditioner.

Accordingly, there is a need in the art for a new method for controlling a rotational speed of an external fan of an air conditioner to solve the above problem.

### SUMMARY OF THE INVENTION

In order to solve the above problem in the prior art, that is, to solve the problem of low adjustment accuracy of external fans of existing air conditioners, the present invention according to claim 1 provides a method for controlling a rotational speed of an external fan of an air conditioner, in which the air conditioner includes a compressor and an outdoor heat exchanger, the outdoor heat exchanger is equipped with the external fan, and the method for controlling the rotational speed includes: obtaining a pressure value of a refrigerant pipeline between the compressor and the outdoor heat exchanger after the external fan starts; comparing the pressure value with a preset pressure threshold; and selectively controlling the rotational speed of the external fan to increase or decrease by a rotational speed adjustment amount based on a comparison result; in which the preset pressure threshold is determined based on an outdoor ambient temperature.

When the air conditioner is running in a cooling mode, the pressure value is a high pressure value, the preset pressure threshold is a preset high pressure threshold, and the step of "selectively controlling the rotational speed of the external fan to increase or decrease by the rotational speed adjustment amount based on the comparison result" further includes:

if the high pressure value is larger than the preset high pressure threshold, then controlling the rotational speed of the external fan to increase by the rotational speed adjustment amount; and

if the high pressure value is smaller than the preset high pressure threshold, then controlling the rotational speed of the external fan to decrease by the rotational speed adjustment amount;
the method further comprises:
obtaining an exhaust temperature of the compressor;
calculating an exhaust superheat degree of the compressor based on the exhaust temperature and the preset high pressure threshold;
judging which one of the exhaust superheat degree and an exhaust superheat degree threshold is larger;
and correcting the preset high pressure threshold based on a judgment result.

When the air conditioner is running in a heating mode, the pressure value is a low pressure value, the preset pressure threshold is a preset low pressure threshold, and the step of "selectively controlling the rotational speed of the external fan to increase or decrease by the rotational speed adjustment amount based on the comparison result" further includes:

if the low pressure value is smaller than the preset low pressure threshold, then controlling the rotational speed of the external fan to increase by the rotational speed adjustment amount; and

if the low pressure value is larger than the preset low pressure threshold, then controlling the rotational speed of the external fan to decrease by the rotational speed adjustment amount;
the method further comprises:
obtaining a suction temperature of the compressor;
calculating a suction superheat degree of the compressor based on the suction temperature and the preset low pressure threshold;
judging which one of the suction superheat degree and a suction superheat degree threshold is larger; and
correcting the preset low pressure threshold based on a judgment result.

In a preferred technical solution of the method for controlling the rotational speed of the external fan of the air conditioner, after the step of "controlling the rotational speed of the external fan to increase by the rotational speed adjustment amount", the method for controlling the rotational speed further includes:
judging whether the rotational speed of the external fan is larger than its maximum rotational speed; and
if yes, controlling the external fan to run at the maximum rotational speed.

In a preferred technical solution of the method for controlling the rotational speed of the external fan of the air conditioner, after the step of "controlling the rotational speed of the external fan to decrease by the rotational speed adjustment amount", the method for controlling the rotational speed further includes:
judging whether the rotational speed of the external fan is smaller than its minimum rotational speed; and
if yes, controlling the external fan to run at the minimum rotational speed.

In a preferred technical solution of the method for controlling the rotational speed of the external fan of the air conditioner, before the external fan starts, the method for controlling the rotational speed further includes:
determining an initial rotational speed of the external fan based on the outdoor ambient temperature; and
controlling the external fan to start based on the initial rotational speed.

In a preferred technical solution of the method for controlling the rotational speed of the external fan of the air conditioner, before the external fan starts, the method for controlling the rotational speed further includes:
obtaining an indoor ambient temperature;
calculating a difference between the indoor ambient temperature and a set temperature; and
if the difference satisfies a preset condition, then controlling the external fan to start.

In a preferred technical solution of the method for controlling the rotational speed of the external fan of the air conditioner, the rotational speed adjustment amount is larger than a rotational speed error of the external fan.

It can be understood by those skilled in the art that in the preferred technical solution of the present invention, the air conditioner includes a compressor and an outdoor heat exchanger, the outdoor heat exchanger is equipped with the external fan, and the method for controlling the rotational speed includes: obtaining a pressure value of a refrigerant pipeline between the compressor and the outdoor heat exchanger after the external fan starts; comparing the pressure value with a preset pressure threshold; and selectively controlling the rotational speed of the external fan to increase or decrease by a rotational speed adjustment amount based on a comparison result; in which the preset pressure threshold is determined based on an outdoor ambient temperature.

By selectively controlling the rotational speed of the external fan to increase or decrease by the rotational speed adjustment amount based on the pressure value and the preset pressure threshold, the control method of the present application can realize a stepless speed adjustment of the external fan, so that the rotational speed of the external fan can match the pressure value of the air conditioning system, the influence of the rotational speed of the external fan on the pressure of the air conditioning system can be reduced, and a stable operation of the air conditioning system can be ensured.

Further, by determining the preset pressure threshold based on the outdoor ambient temperature, it can be ensured that the preset pressure threshold matches the current outdoor ambient temperature, so that the air conditioner runs in an optimal state under the current outdoor ambient temperature after the rotational speed of the external fan is adjusted.

Further, by correcting the preset high pressure threshold based on the exhaust superheat degree, and then further adjusting the rotational speed of the external fan based on the corrected preset high pressure threshold, the air conditioning system can always work in a better state to prevent an excessively high or excessively low exhaust superheat degree from adversely affecting the operation of the system. Similarly, by correcting the preset low pressure threshold based on the suction superheat degree, and then further adjusting the rotational speed of the external fan based on the corrected preset low pressure threshold, the air conditioning system can always work in a better state to prevent an excessively high or excessively low suction superheat degree from adversely affecting the operation of the system.

Further, by setting the rotational speed adjustment amount to be larger than the rotational speed error of the external fan, the rotational speed adjustment of the external fan can be effectively performed at each time, thus avoiding the phenomenon of "false adjustment" of the rotational speed.

### BRIEF DESCRIPTION OF THE DRAWINGS

The method for controlling a rotational speed of an external fan of an air conditioner of the present invention will be described below with reference to the accompanying drawings. In the drawings:
FIG. 1 is a schematic system diagram of an air conditioner of the present invention;
FIG. 2 is a flowchart of a method for controlling a rotational speed of an external fan of an air conditioner according to the present invention;
FIG. 3 is a diagram showing a relationship between an initial rotational speed of the external fan and an outdoor ambient temperature during a cooling operation of the air conditioner of the present invention;
FIG. 4 is a diagram showing a relationship between a preset high pressure threshold and the outdoor ambient temperature during the cooling operation of the air conditioner of the present invention;
FIG. 5 is a logic diagram of the rotational speed control of the external fan during the cooling operation of the air conditioner of the present invention;
FIG. 6 is a diagram showing the relationship between the initial rotational speed of the external fan and the outdoor ambient temperature during a heating operation of the air conditioner of the present invention;
FIG. 7 is a diagram showing a relationship between a preset low pressure threshold and the outdoor ambient temperature during the heating operation of the air conditioner of the present invention; and
FIG. 8 is a logic diagram of the rotational speed control of the external fan during the heating operation of the air conditioner of the present invention.

### List of reference signs:

1: compressor; 2: four-way valve; 3: outdoor heat exchanger; 4: electronic expansion valve; 5: indoor heat exchanger; 6: gas-liquid separator; 7: external fan; 8: internal fan; 9: high pressure sensor; 10: low pressure sensor.

### DETAILED DESCRIPTION OF THE EMBODIMENT(S) OF THE INVENTION

Preferred embodiments of the present invention will be described below with reference to the drawings. It should be understood by those skilled in the art that these embodiments are only used to explain the present invention, and are not intended to limit the scope of protection of the present invention which is defined by the appended claims. For example, although the following embodiments are explained in conjunction with a single-connection machine, this is not intended to limit the scope of protection of the present invention. For example, the present application can also be applied to central air conditioners, multi-connections air conditioners, etc.

It should be noted that in the description of the present disclosure, directional or positional relationships indicated by terms such as "central", "upper", "lower", "left", "right", "vertical", "horizontal", "inner" and "outer" are based on the directional or positional relationships shown in the drawings. They are merely used for the convenience of description, and do not indicate or imply that the device or element involved must have a specific orientation, or be configured or operated in a specific orientation, and therefore they should not be construed as limiting the present disclosure. In addition, terms "first", "second" and "third" are used for descriptive purpose only, and should not be construed as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be an internal communication between two elements. For those skilled in the art, the specific meaning of the above terms in the present disclosure can be understood according to specific situations.

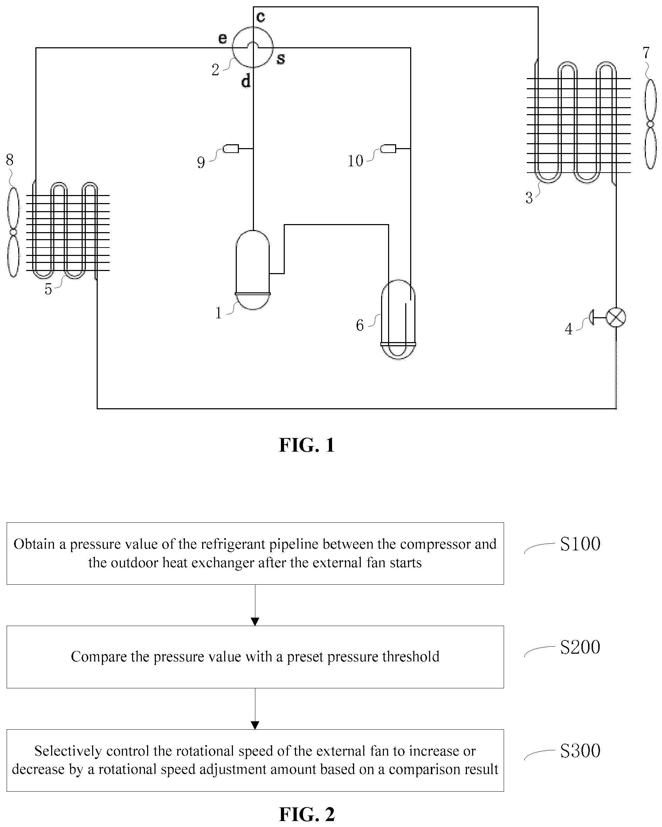

Next, referring to FIG. 1, a structure of the air conditioner of the present application will be described. FIG. 1 is a schematic system diagram of the air conditioner of the present disclosure.

As shown in FIG. 1, the air conditioner of the present application includes a compressor 1, a four-way valve 2, an outdoor heat exchanger 3, an electronic expansion valve 4, an indoor heat exchanger 5, and a gas-liquid separator 6, all of which are connected by refrigerant pipelines. The outdoor heat exchanger is equipped with an external fan 7, and the indoor heat exchanger is equipped with an internal fan 8. Preferably, in order to realize speed adjustment of the external fan 7, a DC fan is used as the external fan 7 in the present application. According to the connection state shown in FIG. 1, an exhaust port of the compressor 1 is in communication with a port d of the four-way valve 2, a port c of the four-way valve 2 is in communication with an inlet of the outdoor heat exchanger 3, and an outlet of the outdoor heat exchanger 3 is in communication with an inlet of the electronic expansion valve 4; an outlet of the electronic expansion valve 4 is in communication with an inlet of the indoor heat exchanger 5, an outlet of the indoor heat exchanger 5 is in communication with a port e of the four-way valve 2, a port s of the four-way valve 2 is in communication with a gas inlet pipe of the gas-liquid separator 6, and a gas outlet pipe of the gas-liquid separator 6 is in communication with a suction port of the compressor 1. A high pressure sensor 9 is provided on the refrigerant pipeline to which the exhaust port of the compressor is connected, and a low pressure sensor 10 is provided on the refrigerant pipeline to which the gas inlet pipe of the gas-liquid separator is connected.

With reference to FIG. 2, the method for controlling the rotational speed of the external fan of the air conditioner of the present application will be described. FIG. 2 is a flowchart of a method for controlling the rotational speed of the external fan of the air conditioner according to the present disclosure.

As shown in FIG. 2, in order to solve the problem of low adjustment accuracy of the external fans of existing air conditioners, the method for controlling the rotational speed of the external fan of the air conditioner of the present application mainly includes the following steps S100 to S300:

S100: obtaining a pressure value of the refrigerant pipeline between the compressor and the outdoor heat exchanger after the external fan starts. For example, after the external fan starts, the pressure value of the refrigerant pipeline is obtained by the pressure sensors. With reference to FIG. 1, the refrigerant pipeline between compressor 1 and outdoor heat exchanger 3 differs depending on an operating mode of the air conditioner. When the air conditioner is running in a cooling mode, the refrigerant pipeline between the compressor 1 and the outdoor heat exchanger 3 is the refrigerant pipeline to which the exhaust port of the compressor 1 is connected, and the pressure collected at this time is the pressure of the high pressure sensor 9. When the air conditioner is running in a heating mode, the refrigerant pipeline between the compressor 1 and the outdoor heat exchanger 3 is the refrigerant pipeline to which the suction port of the compressor 1 is connected and to which the gas inlet pipe of the gas-liquid separator 6 is further connected, and the pressure collected at this time is the pressure of the low pressure sensor 10.

S200: comparing the pressure value with a preset pressure threshold. For example, in a more preferred embodiment, the preset pressure threshold is determined based on an outdoor ambient temperature. Specifically, taking the cooling mode as an example, the preset pressure threshold may be determined as follows: when the air conditioner is running in the cooling mode, working parameters of each component of the air conditioner (such as a frequency of the compressor, an opening degree of the expansion valve, a rotational speed of the external fan, etc.) are adjusted so that the air conditioner is in a better running state. The high pressure on the refrigerant pipeline to which the exhaust port of the compressor is connected at this time is recorded, and this high pressure is used as the preset high pressure threshold at the current outdoor ambient temperature. The heating mode is similar to this, in which the low pressure when the air conditioner is in the better running state is used as the preset low pressure threshold at the current outdoor ambient temperature. After the pressure value is obtained, the pressure value is compared with the preset pressure threshold at the current outdoor ambient temperature; that is, in the cooling mode, the high pressure value is compared with the preset high pressure threshold, and in the heating mode, the low pressure value is compared with the preset low pressure threshold.

S300: selectively controlling the rotational speed of the external fan to increase or decrease by a rotational speed adjustment amount based on a comparison result. For example, the rotational speed adjustment amount may be a small rotational speed value; for example, the rotational speed adjustment amount may be any value from 5rpm to 20rpm (revolutions per minute), which is much smaller than a rotational speed difference between the various fan speed settings in the prior art. After the pressure value is compared with the preset pressure threshold, whether the current high or low pressure of the air conditioner meets the requirements can be known, so that if the high or low pressure does not meet the requirements, the pressure value can be changed by adjusting the rotational speed of the external fan. For example, in the cooling mode, if the high pressure value is larger than the preset high pressure threshold, it proves that an exhaust pressure of the compressor is too high at this time, which is not advantageous for a stable operation of the air conditioner; at this time, by controlling the rotational speed of the external fan to increase by a rotational speed adjustment amount, such as by 10rpm, the heat exchange amount of the outdoor unit is increased and the exhaust pressure of the compressor is reduced; and if the high pressure value is smaller than the preset high pressure threshold, it proves that the exhaust pressure of the compressor is too low at this time, and the compressor may have a risk of liquid hammer; at this time, by controlling the rotational speed of the external fan to decrease by a rotational speed adjustment amount, such as by 10rpm, the heat exchange amount of the outdoor unit is reduced and the exhaust pressure of the compressor is increased. The rotational speed of the external fan may be changed by adjusting a voltage or excitation current of the DC motor of the external fan. The adjustment method is now relatively mature and will not be described in detail herein.

By selectively controlling the rotational speed of the external fan to increase or decrease by a rotational speed adjustment amount based on the pressure value and the preset pressure threshold, the control method of the present application can realize a stepless speed adjustment of the external fan, so that the rotational speed of the external fan can match the pressure value of the air conditioning system, the influence of the rotational speed of the external fan on the pressure of the air conditioning system can be reduced, and a stable operation of the air conditioning system can be ensured. Further, by determining the preset pressure threshold based on the outdoor ambient temperature, it can be ensured that the preset pressure threshold matches the current outdoor ambient temperature, so that the air conditioner runs in an optimal state under the current outdoor ambient temperature after the rotational speed of the external fan is adjusted.

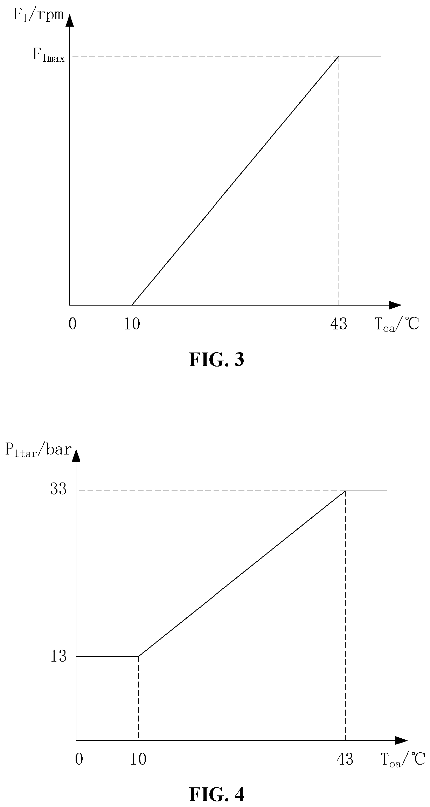

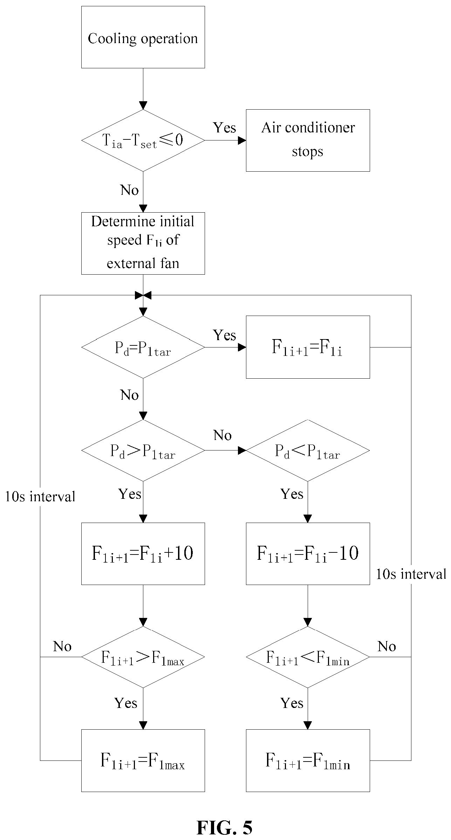

With reference to FIGS. 3, 4 and 5, the method for controlling the rotational speed of the present application will be described below in an example in which the air conditioner is running in the cooling mode. FIG. 3 is a diagram showing a relationship between an initial rotational speed of the external fan and the outdoor ambient temperature during a cooling operation of the air conditioner of the present disclosure; FIG. 4 is a diagram showing a relationship between the preset high pressure threshold and the outdoor ambient temperature during the cooling operation of the air conditioner of the present disclosure; and FIG. 5 is a logic diagram of the rotational speed control of the external fan during the cooling operation of the air conditioner of the present disclosure.

As shown in FIG. 5, in a possible embodiment, before step S100, the method for controlling the rotational speed further includes: obtaining an indoor ambient temperature; calculating a difference between the indoor ambient temperature and a set temperature; and if the difference satisfies a preset condition, then controlling the external fan to start. Specifically, after the air conditioner receives a cooling operation instruction, firstly, the indoor ambient temperature is obtained by a temperature sensor provided indoors, and then which one of the indoor ambient temperature and the user's set temperature is larger is judged. If a difference between the indoor ambient temperature and the set temperature is larger than zero, it proves that the indoor ambient temperature has not reached the temperature set by the user at this time, and the room needs to be cooled. At this time, the necessary components such as the compressor, the external fan, the internal fan, and the electronic expansion valve are controlled to start, and the air conditioner starts a cooling cycle. If the difference between the indoor ambient temperature and the set temperature is smaller than or equal to zero, it proves that the indoor ambient temperature has reached the temperature set by the user at this time, and the air conditioner does not need to perform the cooling operation. At this time, the air conditioner is controlled to stop or not start.

In a possible embodiment, before step S100, the method for controlling the rotational speed further includes: determining an initial rotational speed of the external fan based on the outdoor ambient temperature; and controlling the external fan to start based on the initial rotational speed. Specifically, if the difference between the indoor ambient temperature and the set temperature is larger than zero, that is, when it is determined that the external fan needs to start, the cooling operation of the air conditioner is required. At this time, the outdoor ambient temperature is obtained by the temperature sensor provided outdoors, and then based on the obtained outdoor ambient temperature, the initial rotational speed of the external fan is determined. The initial rotational speed of the external fan may be determined by looking up a map, looking up a table or by calculating.

Referring to FIG. 3, in a possible embodiment, the initial rotational speeds of the external fan corresponding to several outdoor ambient temperatures may be determined in advance through experiments, and then based on the correspondence between the outdoor ambient temperatures and the initial rotational speeds of the external fan, a curve is fitted. When the initial rotational speed of the external fan needs to be determined, a value is taken from the curve according to the interpolation method. For example, as shown in FIG. 3, when the outdoor ambient temperature Tₒₐ≥43°C, let the initial rotational speed of the external fan F₁=F₁ₘₐₓ; when the outdoor ambient temperature Tₒₐ<10°C, let the initial rotational speed of the external fan F₁=0, so an initial rotational speed-outdoor ambient temperature curve is fitted based on the above data; and when 10°C≤Tₒₐ<43°C, the value is taken according to the interpolation method.

Of course, the above example is only used to illustrate a specific fitting method for determining the initial rotational speed of the external fan, and those skilled in the art may also use other methods to determine the initial rotational speed of the external fan. For example, in the light of the teachings of the above example, multiple sets of outdoor ambient temperatures can be used with the initial rotational speeds of the external fan for fitting, and the fitted curve may be a straight line, a curve or a step line, etc.

Referring to FIG. 4, in a possible embodiment, the preset high pressure threshold may be determined as follows: better compressor outlet pressure values during the operation of the air conditioner at different outdoor ambient temperatures are determined through experiments, and the pressure values are used as the preset high pressure thresholds at the outdoor ambient temperatures; then based on the correspondence between the preset high pressure thresholds and the outdoor ambient temperatures, a function is obtained by fitting in which an independent variable is the outdoor ambient temperature and the dependent variable is the preset high pressure threshold. When it is necessary to determine the preset high pressure threshold at the current outdoor ambient temperature, the outdoor ambient temperature is input into this function so that the preset high pressure threshold can be determined.

As shown in FIG. 4, when the outdoor ambient temperature Tₒₐ≥43°C, it is determined through experiments that when the compressor is working, a better outlet pressure value P₁ₜₐᵣ=33bar. When the outdoor ambient temperature Tₒₐ < 10°C, it is determined that when the compressor is working, the better outlet pressure value P₁ₜₐᵣ=13bar. Based on the two sets of data, the function P₁ₜₐᵣ=0.67×Tₒₐ+6.3 can be obtained by fitting. Therefore, when the outdoor ambient temperature satisfies 10°C≤Tₒₐ<43°C, the outdoor ambient temperature is brought into the above-mentioned function to determine the preset high pressure threshold at the current outdoor ambient temperature.

Of course, the above example is only used to illustrate a specific fitting method for determining the preset high pressure threshold, and those skilled in the art may also use other methods to determine the preset high pressure threshold. For example, in the light of the teachings of the above example, multiple sets of outdoor ambient temperatures can be used with the corresponding high pressure values of the compressor outlet for fitting of the function, or a curve may also be fitted based on the above data, and the preset high pressure thresholds at different outdoor ambient temperatures can be determined based on the interpolation method.

Referring to FIG. 5, in a possible embodiment, as described above, when the air conditioner is running in the cooling mode, the obtained pressure value is the high pressure value of the refrigerant pipeline to which the exhaust port of the compressor is connected, and correspondingly, the preset pressure threshold is the preset high pressure threshold. In this case, step S300 further includes: if the high pressure value is larger than the preset high pressure threshold, then controlling the rotational speed of the external fan to increase by a rotational speed adjustment amount; if the high pressure value is smaller than the preset high pressure threshold, then controlling the rotational speed of the external fan to decrease by a rotational speed adjustment amount; and if the high pressure value is equal to the preset high pressure threshold, then controlling the external fan to maintain the current rotational speed.

For example, when it is judged that the high pressure value is larger than the preset high pressure threshold, it proves that the exhaust pressure of the compressor is too high at this time, which is not advantageous for a stable operation of the air conditioner. At this time, by controlling the rotational speed of the external fan to increase by a rotational speed adjustment amount, such as by 10rpm, the heat exchange amount of the outdoor unit is increased and the exhaust pressure of the compressor is reduced; and if the high pressure value is smaller than the preset high pressure threshold, it proves that the exhaust pressure of the compressor is too low at this time, and the compressor may have a risk of liquid hammer; at this time, by controlling the rotational speed of the external fan to decrease by a rotational speed adjustment amount, such as by 10rpm, the heat exchange amount of the outdoor unit is reduced and the exhaust pressure of the compressor is increased. When the high pressure value is equal to the preset high pressure threshold, it proves that the exhaust pressure of the compressor is in a better state at this time, so maintaining the current rotational speed of the external fan will be sufficient.

More preferably, the rotational speed adjustment amount is larger than a rotational speed error of the external fan. It can be understood by those skilled in the art that any DC motor has a rotational error when it rotates, and the error can be measured through experiments, or it has already been marked on a motor nameplate or in a manual when it leaves the factory. Generally, the rotational speed error is very small. For example, through actual measurement, the applicant finds that the rotational speed error of the DC motor used in the present application is ±5rpm, so the rotational speed adjustment amount of the external fan in the present application may be set to be larger than 5rpm; for example, the rotational speed adjustment amount in the present application is set to be 10rpm so that the rotational speed adjustment of the external fan can be effectively performed at each time, thus avoiding the phenomenon of "false adjustment" of the rotational speed. Of course, those skilled in the art can determine the magnitude of the rotational speed adjustment amount based on the actual external fan used, and the change of this amount does not exceed the scope of protection of the present application.

Next, reference is made to FIG. 5, in a possible embodiment, after step S300, that is, after the rotational speed of the external fan is adjusted, the control method of the present application further includes: judging whether the rotational speed of the external fan is larger than its maximum rotational speed after the rotational speed of the external fan is controlled to increase by the rotational speed adjustment amount, and if yes, then controlling the external fan to run at the maximum rotational speed; and judging whether the rotational speed of the external fan is smaller than its minimum rotational speed after the rotational speed of the external fan is controlled to decrease by the rotational speed adjustment amount, and if yes, then controlling the external fan to run at the minimum rotational speed.

For example, those skilled in the art know that the rotational speed of the external fan has a maximum value and a minimum value. When the rotational speed of the external fan exceeds the maximum value or is lower than the minimum value, it is easy to cause failure and damage of the external fan. Therefore, when the detected high pressure value is larger than the preset high pressure threshold, after the rotational speed of the external fan is controlled to increase by the rotational speed adjustment amount, it is necessary to judge whether the rotational speed of the external fan is larger than the maximum rotational speed. If the rotational speed is larger than the maximum rotational speed, the external fan is controlled to run at the maximum rotational speed to prevent external fan failure. Similarly, when the detected high pressure value is smaller than the preset high pressure threshold, after the rotational speed of the external fan is controlled to decrease by the rotational speed adjustment amount, it is necessary to judge whether the rotational speed of the external fan is smaller than the minimum rotational speed. If the rotational speed is smaller than the minimum rotational speed, the external fan is controlled to run at the minimum rotational speed to prevent external fan failure. Although the specific values of the maximum and minimum rotational speeds of the external fan are not described in the present application, this does not mean that the present application cannot be implemented. On the contrary, those skilled in the art know that the maximum and minimum rotational speeds of the DC motor are different for different models of fans. For example, the minimum rotational speed of the DC motor may be zero or any value larger than zero.

In a possible embodiment, the method for controlling the rotational speed further includes: obtaining an exhaust temperature of the compressor; calculating an exhaust superheat degree of the compressor based on the exhaust temperature and the preset high pressure threshold; judging which one of the exhaust superheat degree and an exhaust superheat degree threshold is larger; correcting the preset high pressure threshold based on a judgment result. Specifically, when the air conditioner is running normally, its exhaust superheat degree should not be too high or too low. If the exhaust superheat degree is too high, it will cause the refrigerant to overheat and damage the refrigerant oil of the compressor, which may cause deterioration of the refrigerant oil of the compressor and affect the normal running of the system. If the exhaust superheat degree is too low, compression of the refrigerant will be insufficient, and there will be the possibility of liquid compression, which is detrimental to the system and affects the life of the system. Therefore, in the process of adjusting the rotational speed of the external fan, the preset high pressure threshold can also be further corrected, and the rotational speed of the external fan can be adjusted through the corrected preset high pressure threshold, so that the air conditioning system can always work in a better state to prevent excessively high or low exhaust superheat degree from adversely affecting system operation.

For example, the exhaust temperature of the compressor can be detected by a temperature sensor provided on the refrigerant pipeline to which the exhaust port of the compressor is connected, and the corresponding saturation temperature can be determined by the preset high pressure threshold. At this time, the exhaust superheat degree = the exhaust temperature minus the saturation temperature corresponding to the preset high pressure threshold. After the exhaust superheat degree is calculated, the exhaust superheat degree is compared with a preset exhaust superheat degree threshold. If the exhaust superheat degree is greater than the exhaust superheat degree threshold, it proves that either the exhaust temperature of the compressor is too high, or the saturation temperature corresponding to the preset high pressure threshold is too low (that is, the preset high pressure threshold is too low); at this time, the preset high pressure threshold P₁ₜₐᵣ can be positively corrected; for example, let P₁ₜₐᵣ'=1.02×P₁ₜₐᵣ, where P₁ₜₐᵣ is the preset high pressure threshold at the current outdoor ambient temperature, and P₁ₜₐᵣ' is the corrected preset high pressure threshold. Similarly, if the exhaust superheat degree is less than the exhaust superheat degree threshold, it proves that either the exhaust temperature of the compressor is too low, or the saturation temperature corresponding to the preset high pressure threshold is too high (that is, the preset high pressure threshold is too high); at this time, the preset high pressure threshold P₁ₜₐᵣ can be negatively corrected; for example, let P₁ₜₐᵣ'=0.98×P₁ₜₐᵣ, where P₁ₜₐᵣ is the preset high pressure threshold at the current outdoor ambient temperature, and P₁ₜₐᵣ' is the corrected preset high pressure threshold. Of course, the coefficients 1.02 and 0.98 are not unique, and those skilled in the art can make flexible adjustments based on actual application scenes. Such adjustments do not deviate from the principle of the present application.

Hereinafter, referring to FIG. 5, a possible control process of the operation of the air conditioner in the cooling mode will be described.

As shown in FIG. 5, after the air conditioner is turned on and runs in the cooling mode, the indoor ambient temperature Tᵢₐ is obtained first and compared with a temperature Tₛₑₜ set by the user-when Tᵢₐ-Tₛₑₜ≤0 holds, it proves that the current indoor ambient temperature has already reached the set temperature, and the air conditioner is controlled to stop; and when Tᵢₐ-Tₛₑₜ≤0 does not hold, it proves that the air conditioner needs to run in the cooling mode to cool the room; at this time, the initial rotational speed F₁ᵢ of the external fan and the preset high pressure threshold P₁ₜₐᵣ are determined based on the current outdoor ambient temperature, and based on the initial rotational speed F₁ᵢ, the external fan of the air conditioner is controlled to start to run-after the external fan starts to run, the high pressure value P_{d} at the compressor outlet is detected and compared with the preset high pressure threshold P₁ₜₐᵣ→When P_{d}=P₁ₜₐᵣ holds, the external fan is controlled to maintain the current rotational speed F₁ᵢ; when P_{d}=P₁ₜₐᵣ does not hold, which one of the two is larger is further judged→(1) when P_{d}>P₁ₜₐᵣ, the rotational speed of the external fan is controlled to increase by 10rpm, that is, F₁ᵢ₊₁=F₁ᵢ+10, and it is judged whether F₁ᵢ₊₁>F₁ₘₐₓ holds→ if it holds, the external fan is controlled to run at F₁ₘₐₓ, and then after an interval of 10s, the relationship between P_{d} and P₁ₜₐᵣ is re-judged; if it does not hold, the external fan is controlled to run at F₁ᵢ₊₁, and then after an interval of 10s, the relationship between P_{d} and P₁ₜₐᵣ is re-judged-(2) when P_{d}<P₁ₜₐᵣ, the rotational speed of the external fan is controlled to decrease by 10rpm, that is, F₁ᵢ₊₁=F₁ᵢ-10, and it is judged whether F₁ᵢ₊₁<F₁ₘᵢₙ holds→if it holds, the external fan is controlled to run at F₁ₘᵢₙ, and then after an interval of 10s, the relationship between P_{d} and P₁ₜₐᵣ is re-judged; and if it does not hold, the external fan is controlled to run at F₁ᵢ₊₁, and then after an interval of 10s, the relationship between P_{d} and P₁ₜₐᵣ is re-judged.

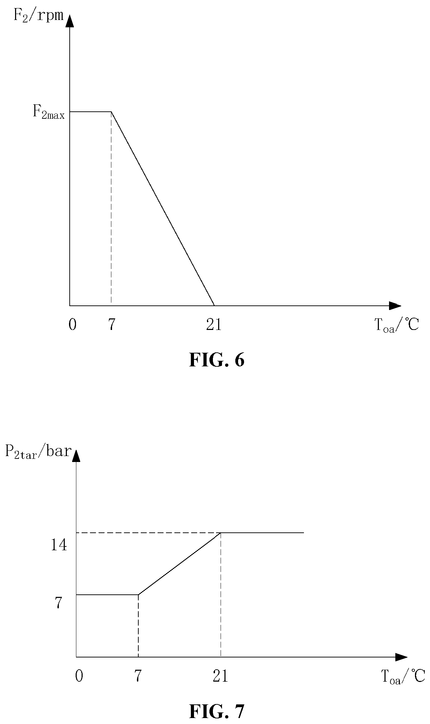

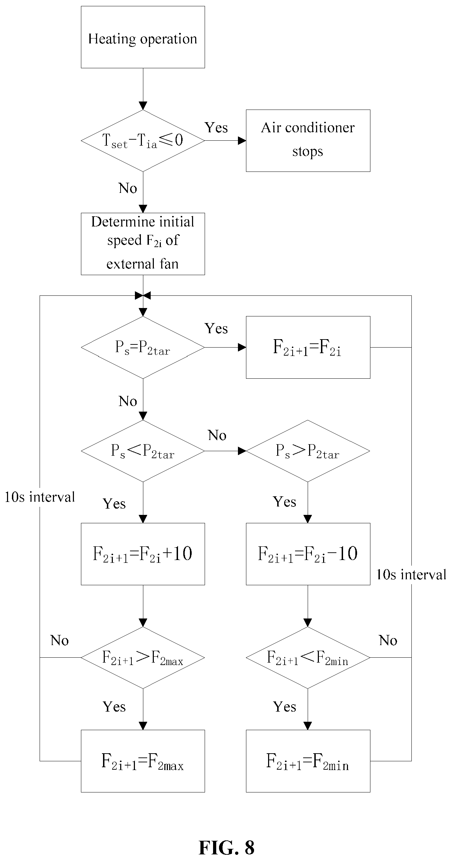

With reference to FIGS. 6, 7 and 8, the method for controlling the rotational speed of the present application will be described below in an example in which the air conditioner is running in the heating mode. FIG. 6 is a diagram showing a relationship between the initial rotational speed of the external fan and the outdoor ambient temperature during a heating operation of the air conditioner of the present disclosure; FIG. 7 is a diagram showing a relationship between the preset low pressure threshold and the outdoor ambient temperature during the heating operation of the air conditioner of the present disclosure; and FIG. 8 is a logic diagram of the rotational speed control of the external fan during the heating operation of the air conditioner of the present disclosure.

As shown in FIG. 8, in a possible embodiment, before step S100, the method for controlling the rotational speed further includes: obtaining an indoor ambient temperature; calculating a difference between the indoor ambient temperature and a set temperature; and if the difference satisfies a preset condition, then controlling the external fan to start. Specifically, after the air conditioner receives a heating operation instruction, firstly, the indoor ambient temperature is obtained by a temperature sensor provided indoors, and then which one of the indoor ambient temperature and the user's set temperature is larger is judged. If a difference between the set temperature and the indoor ambient temperature is larger than zero, it proves that the indoor ambient temperature has not reached the temperature set by the user at this time, and the room needs to be heated. At this time, the necessary components such as the compressor, the external fan, the internal fan, and the electronic expansion valve are controlled to start, and the air conditioner starts a heating cycle. If the difference between the set temperature and the indoor ambient temperature is smaller than or equal to zero, it proves that the indoor ambient temperature has reached the temperature set by the user at this time, and the air conditioner does not need to perform the heating operation. At this time, the air conditioner is controlled to stop or not start.

In a possible embodiment, before step S100, the method for controlling the rotational speed further includes: determining an initial rotational speed of the external fan based on the outdoor ambient temperature; and controlling the external fan to start based on the initial rotational speed. Specifically, if the difference between the set temperature and the indoor ambient temperature is larger than zero, that is, when it is determined that the external fan needs to start, the heating operation of the air conditioner is required. At this time, the outdoor ambient temperature is obtained by the temperature sensor provided outdoors, and then based on the obtained outdoor ambient temperature, the initial rotational speed of the external fan is determined. The initial rotational speed of the external fan may be determined by looking up a map, looking up a table or by calculating.

Referring to FIG. 6, in a possible embodiment, the initial rotational speeds of the external fan corresponding to several outdoor ambient temperatures may be determined in advance through experiments, and then based on the correspondence between the outdoor ambient temperatures and the initial rotational speeds of the external fan, a curve is fitted. When the initial rotational speed of the external fan needs to be determined, a value is taken from the curve according to the interpolation method. For example, as shown in FIG. 6, when the outdoor ambient temperature Tₒₐ≤7°C, let the initial rotational speed of the external fan F₂=F₂ₘₐₓ; when the outdoor ambient temperature Tₒₐ≥21°C, let the initial rotational speed of the external fan F₂=0, so an initial rotational speed-outdoor ambient temperature curve is fitted based on the above data; and when 7°C <Tₒₐ<21°C, the value is taken according to the interpolation method.

Of course, the above example is only used to illustrate a specific fitting method for determining the initial rotational speed of the external fan, and those skilled in the art may also use other methods to determine the initial rotational speed of the external fan. For example, in the light of the teachings of the above example, multiple sets of outdoor ambient temperatures can be used with the initial rotational speeds of the external fan for fitting, and the fitted curve may be a straight line, a curve, etc.

Referring to FIG. 7, in a possible embodiment, the preset low pressure threshold may be determined as follows: better compressor outlet pressure values during the operation of the air conditioner at different outdoor ambient temperatures are determined through experiments, and the pressure values are used as the preset low pressure thresholds at the outdoor ambient temperatures; then based on the correspondence between the preset low pressure thresholds and the outdoor ambient temperatures, a function is obtained by fitting in which an independent variable is the outdoor ambient temperature and the dependent variable is the preset low pressure threshold. When it is necessary to determine the preset low pressure threshold at the current outdoor ambient temperature, the outdoor ambient temperature is input into this function so that the preset low pressure threshold can be determined.

As shown in FIG. 7, when the outdoor ambient temperature Tₒₐ≥21°C, it is determined through experiments that when the compressor is working, a better outlet pressure value P₂ₜₐᵣ=14bar. Similarly, when the outdoor ambient temperature Tₒₐ≤7°C, it is determined that when the compressor is working, the better outlet pressure value P₂ₜₐᵣ=7bar. According to the experiments, an evaporation temperature of the outdoor unit is relatively high at this time, the machine will not frost, and the heating effect is better. Based on the two sets of data, the function P₂ₜₐᵣ=0.5×Tₒₐ+3.5 can be obtained by fitting. Therefore, when the outdoor ambient temperature satisfies 7°C<Tₒₐ<21°C, the outdoor ambient temperature is brought into the above-mentioned function to determine the preset low pressure threshold at the current outdoor ambient temperature.

Of course, the above example is only used to illustrate a specific fitting method for determining the preset low pressure threshold, and those skilled in the art may also use other methods to determine the preset low pressure threshold. For example, in the light of the teachings of the above example, multiple sets of outdoor ambient temperatures can be used with the corresponding low pressure values of the compressor outlet for fitting of the function, or a curve may also be fitted based on the above data, and the preset low pressure thresholds at different outdoor ambient temperatures can be determined based on the interpolation method.

Referring to FIG. 8, in a possible embodiment, as described above, when the air conditioner is running in the heating mode, the obtained pressure value is the low pressure value of the refrigerant pipeline to which the suction port of the compressor is connected and to which the gas inlet pipe of the gas-liquid separator is further connected, and correspondingly, the preset pressure threshold is the preset low pressure threshold. In this case, step S300 further includes: if the low pressure value is smaller than the preset low pressure threshold, then controlling the rotational speed of the external fan to increase by a rotational speed adjustment amount; if the low pressure value is larger than the preset low pressure threshold, then controlling the rotational speed of the external fan to decrease by a rotational speed adjustment amount; and if the low pressure value is equal to the preset low pressure threshold, then controlling the external fan to maintain the current rotational speed.

For example, when it is judged that the low pressure value is smaller than the preset low pressure threshold, it proves that the suction pressure of the compressor is too low at this time, so the compressor has a risk of liquid hammer. At this time, by controlling the rotational speed of the external fan to increase by a rotational speed adjustment amount, such as by 10rpm, the heat exchange amount of the outdoor unit is increased and the suction pressure of the compressor is increased; and if the low pressure value is larger than the preset low pressure threshold, it proves that the suction pressure of the compressor is too high at this time, which is not advantageous for a stable operation of the air conditioner; at this time, by controlling the rotational speed of the external fan to decrease by a rotational speed adjustment amount, such as by 10rpm, the heat exchange amount of the outdoor unit is reduced and the suction pressure of the compressor is reduced. When the low pressure value is equal to the preset low pressure threshold, it proves that the suction pressure of the compressor is in a better state at this time, so maintaining the current rotational speed of the external fan will be sufficient.

More preferably, the rotational speed adjustment amount is larger than the rotational speed error of the external fan. It can be understood by those skilled in the art that any DC motor has a rotational error when it rotates, and the error can be measured through experiments, or it has already been marked on a motor nameplate or in a manual when it leaves the factory. Generally, the rotational speed error is very small. For example, through actual measurement, the applicant finds that the rotational speed error of the DC motor used in the present application is ±5rpm, so the rotational speed adjustment amount of the external fan in the present application may be set to be larger than 5rpm; for example, the rotational speed adjustment amount in the present application is set to be 10rpm so that the rotational speed adjustment of the external fan can be effectively performed at each time, thus avoiding the phenomenon of "false adjustment" of the rotational speed. Of course, those skilled in the art can determine the magnitude of the rotational speed adjustment amount based on the actual external fan used, and the change of this amount does not exceed the scope of protection of the present application.

Next, reference is made to FIG. 8, in a possible embodiment, after step S300, that is, after the rotational speed of the external fan is adjusted, the control method of the present application further includes: judging whether the rotational speed of the external fan is larger than its maximum rotational speed after the rotational speed of the external fan is controlled to increase by the rotational speed adjustment amount, and if yes, then controlling the external fan to run at the maximum rotational speed; and judging whether the rotational speed of the external fan is smaller than its minimum rotational speed after the rotational speed of the external fan is controlled to decrease by the rotational speed adjustment amount, and if yes, then controlling the external fan to run at the minimum rotational speed.

For example, those skilled in the art know that the rotational speed of the external fan has a maximum value and a minimum value. When the rotational speed of the external fan exceeds the maximum value or is lower than the minimum value, it is easy to cause failure and damage of the external fan. Therefore, when the detected low pressure value is smaller than the preset low pressure threshold, after the rotational speed of the external fan is controlled to increase by the rotational speed adjustment amount, it is necessary to judge whether the rotational speed of the external fan is larger than the maximum rotational speed. If the rotational speed is larger than the maximum rotational speed, the external fan is controlled to run at the maximum rotational speed to prevent external fan failure. Similarly, when the detected low pressure value is larger than the preset low pressure threshold, after the rotational speed of the external fan is controlled to decrease by the rotational speed adjustment amount, it is necessary to judge whether the rotational speed of the external fan is smaller than the minimum rotational speed. If the rotational speed is smaller than the minimum rotational speed, the external fan is controlled to run at the minimum rotational speed to prevent external fan failure. Although the specific values of the maximum and minimum rotational speeds of the external fan are not described in the present application, this does not mean that the present application cannot be implemented. On the contrary, those skilled in the art know that the maximum and minimum rotational speeds of the DC motor are different for different models of fans. For example, the minimum rotational speed of the DC motor may be zero or any value larger than zero.

In a possible embodiment, the method for controlling the rotational speed further includes: obtaining a suction temperature of the compressor; calculating a suction superheat degree of the compressor based on the suction temperature and the preset low pressure threshold; judging which one of the suction superheat degree and a suction superheat degree threshold is larger; correcting the preset low pressure threshold based on a judgment result. Specifically, when the air conditioner is running normally, its suction superheat degree should not be too high or too low. If the suction superheat degree is too high, it will cause the refrigerant to overheat and damage the refrigerant oil of the compressor, which may cause deterioration of the refrigerant oil of the compressor and affect the normal running of the system. If the suction superheat degree is too low, compression of the refrigerant will be insufficient, and there will be the possibility of liquid compression, which is detrimental to the system and affects the life of the system. Therefore, in the process of adjusting the rotational speed of the external fan, the preset low pressure threshold can also be further corrected, and the rotational speed of the external fan can be adjusted through the corrected preset low pressure threshold, so that the air conditioning system can always work in a better state to prevent excessively high or low suction superheat degree from adversely affecting system operation.

For example, the suction temperature of the compressor can be detected by a temperature sensor provided on the refrigerant pipeline to which the suction port of the compressor is connected, and the corresponding saturation temperature can be determined by the preset low pressure threshold. At this time, the suction superheat degree = the suction temperature minus the saturation temperature corresponding to the preset low pressure threshold. After the suction superheat degree is calculated, the suction superheat degree is compared with a preset suction superheat degree threshold. If the suction superheat degree is greater than the suction superheat degree threshold, it proves that either the suction temperature of the compressor is too high, or the saturation temperature corresponding to the preset low pressure threshold is too low (that is, the preset low pressure threshold is too low); at this time, the preset low pressure threshold P₂ₜₐᵣ can be positively corrected; for example, let P₂ₜₐᵣ'=1.02×P₁ₜₐᵣ, where P₂ₜₐᵣ is the preset low pressure threshold at the current outdoor ambient temperature, and P₂ₜₐᵣ' is the corrected preset low pressure threshold. Similarly, if the suction superheat degree is less than the suction superheat degree threshold, it proves that either the suction temperature of the compressor is too low, or the saturation temperature corresponding to the preset low pressure threshold is too high (that is, the preset low pressure threshold is too high); at this time, the preset low pressure threshold P₂ₜₐᵣ can be negatively corrected; for example, let P₂ₜₐᵣ'=0.98×P₂ₜₐᵣ, where P₂ₜₐᵣ is the preset low pressure threshold at the current outdoor ambient temperature, and P₂ₜₐᵣ' is the corrected preset low pressure threshold. Of course, the coefficients 1.02 and 0.98 are not unique, and those skilled in the art can make flexible adjustments based on actual application scenes. Such adjustments do not deviate from the principle of the present application.

Hereinafter, referring to FIG. 8, a possible control process of the operation of the air conditioner in the heating mode will be described.

As shown in FIG. 8, after the air conditioner is turned on and runs in the heating mode, the indoor ambient temperature Tᵢₐ is obtained first and compared with a temperature Tₛₑₜ set by the user-when Tₛₑₜ-Tᵢₐ≤0 holds, it proves that the current indoor ambient temperature has already reached the set temperature, and the air conditioner is controlled to stop; and when Tₛₑₜ-Tᵢₐ≤0 does not hold, it proves that the air conditioner needs to run in the heating mode to heat the room; at this time, the initial rotational speed F₂ᵢ of the external fan and the preset low pressure threshold P₂ₜₐᵣ are determined based on the current outdoor ambient temperature, and based on the initial rotational speed F₂ᵢ, the external fan of the air conditioner is controlled to start to run-after the external fan starts to run, the low pressure value Pₛ at the compressor outlet is detected and compared with the preset low pressure threshold P₂ₜₐᵣ→When Pₛ=P₂ₜₐᵣ holds, the external fan is controlled to maintain the current rotational speed F₂ᵢ; when Pₛ=P₂ₜₐᵣ does not hold, which one of the two is larger is further judged→(1) when Pₛ<P₂ₜₐᵣ, the rotational speed of the external fan is controlled to increase by 10rpm, that is, F₂ᵢ₊₁=F₂ᵢ+10, and it is judged whether F₂ᵢ₊₁>F₂ₘₐₓ holds→ if it holds, the external fan is controlled to run at F₂ₘₐₓ, and then after an interval of 10s, the relationship between Pₛ and P₂ₜₐᵣ is re-judged; if it does not hold, the external fan is controlled to run at F₂ᵢ₊₁, and then after an interval of 10s, the relationship between Pₛ and P₂ₜₐᵣ is re-judged-(2) when Pₛ>P₂ₜₐᵣ, the rotational speed of the external fan is controlled to decrease by 10rpm, that is, F₂ᵢ₊₁=F₂ᵢ-10, and it is judged whether F₂ᵢ₊₁<F₂ₘᵢₙ holds→if it holds, the external fan is controlled to run at F₂ₘᵢₙ, and then after an interval of 10s, the relationship between Pₛ and P₂ₜₐᵣ is re-judged; and if it does not hold, the external fan is controlled to run at F₂ᵢ₊₁, and then after an interval of 10s, the relationship between Pₛ and Pₛₜₐᵣ is re-judged.

In summary, by selectively controlling the rotational speed of the external fan to increase or decrease by the rotational speed adjustment amount based on the pressure value and the preset pressure threshold, the control method of the present application can realize a stepless speed adjustment of the external fan, so that the rotational speed of the external fan can match the pressure value of the air conditioning system, and the influence of the rotational speed of the external fan on the pressure of the air conditioning system can be reduced. In the process of adjusting the rotational speed, due to the small value of rotational speed adjustment amount and high adjustment accuracy, the high/low pressure of the entire air conditioning system will basically not fluctuate too much compared with the current external fan speed settings, which improves the reliability and stability of system operation.

It should also be noted that although the various steps have been described in the above sequential order in the previous embodiments, it can be understood by those skilled in the art that in order to achieve the effects of these embodiments, it is not necessary to follow such orders between different steps. These steps may be executed at the same time (in parallel) or executed in a reverse order, and these simple changes are all within the scope of protection of the present disclosure. For example, the step of controlling the external fan to start based on the difference between the indoor ambient temperature and the set temperature may be omitted; as another example, the step of determining the initial rotational speed based on the outdoor ambient temperature may be performed at any time before the external fan starts; as further another example, the steps of correcting the preset high pressure threshold and the preset low pressure threshold may be performed when the control method has been executed to any step. As still another example, the present application may also be applied to cooling-only or heating-only air conditioners.

Hitherto, the technical solutions of the present invention have been described in conjunction with the preferred embodiments shown in the accompanying drawings, but it is easily understood by those skilled in the art that the scope of protection of the present invention is obviously not limited to these specific embodiments. Those skilled in the art can make equivalent changes or replacements to relevant technical features, as long as they fall within the scope of protection of the appended claims.

## Claims

1. A method for controlling a rotational speed of an external fan of an air conditioner, the air conditioner comprising a compressor and an outdoor heat exchanger, the outdoor heat exchanger being equipped with the external fan, and the method for controlling the rotational speed comprising:
obtaining a pressure value of a refrigerant pipeline between the compressor and the outdoor heat exchanger after the external fan starts;
comparing the pressure value with a preset pressure threshold; and
selectively controlling the rotational speed of the external fan to increase or decrease by a rotational speed adjustment amount based on a comparison result;
wherein the preset pressure threshold is determined based on an outdoor ambient temperature,
the method **characterised in that**:
when the air conditioner is running in a cooling mode, the pressure value is a high pressure value, the preset pressure threshold is a preset high pressure threshold, and the step of "selectively controlling the rotational speed of the external fan to increase or decrease by the rotational speed adjustment amount based on the comparison result" further comprises:
if the high pressure value is larger than the preset high pressure threshold, then controlling the rotational speed of the external fan to increase by the rotational speed adjustment amount; and
if the high pressure value is smaller than the preset high pressure threshold, then controlling the rotational speed of the external fan to decrease by the rotational speed adjustment amount,
and the method further comprises:
obtaining an exhaust temperature of the compressor;
calculating an exhaust superheat degree of the compressor based on the exhaust temperature and the preset high pressure threshold;
judging which one of the exhaust superheat degree and an exhaust superheat degree threshold is larger; and
correcting the preset high pressure threshold based on a judgment result;
or
wherein when the air conditioner is running in a heating mode, the pressure value is a low pressure value, the preset pressure threshold is a preset low pressure threshold, and the step of "selectively controlling the rotational speed of the external fan to increase or decrease by the rotational speed adjustment amount based on the comparison result" further comprises:
if the low pressure value is smaller than the preset low pressure threshold, then controlling the rotational speed of the external fan to increase by the rotational speed adjustment amount; and
if the low pressure value is larger than the preset low pressure threshold, then controlling the rotational speed of the external fan to decrease by the rotational speed adjustment amount,
and the method further comprises:
obtaining a suction temperature of the compressor;
calculating a suction superheat degree of the compressor based on the suction temperature and the preset low pressure threshold;
judging which one of the suction superheat degree and a suction superheat degree threshold is larger; and
correcting the preset low pressure threshold based on a judgment result.

2. The method for controlling the rotational speed of the external fan of the air conditioner according to claim 1, wherein after the step of "controlling the rotational speed of the external fan to increase by the rotational speed adjustment amount", the method for controlling the rotational speed further comprises:
judging whether the rotational speed of the external fan is larger than its maximum rotational speed; and
if yes, controlling the external fan to run at the maximum rotational speed.

3. The method for controlling the rotational speed of the external fan of the air conditioner according to claim 1, wherein after the step of "controlling the rotational speed of the external fan to decrease by the rotational speed adjustment amount", the method for controlling the rotational speed further comprises:
judging whether the rotational speed of the external fan is smaller than its minimum rotational speed; and
if yes, controlling the external fan to run at the minimum rotational speed.

4. The method for controlling the rotational speed of the external fan of the air conditioner according to claim 1, wherein before the external fan starts, the method for controlling the rotational speed further comprises:
determining an initial rotational speed of the external fan based on the outdoor ambient temperature; and
controlling the external fan to start based on the initial rotational speed.

5. The method for controlling the rotational speed of the external fan of the air conditioner according to claim 1, wherein before the external fan starts, the method for controlling the rotational speed further comprises:
obtaining an indoor ambient temperature;
calculating a difference between the indoor ambient temperature and a set temperature; and
if the difference satisfies a preset condition, then controlling the external fan to start.

6. The method for controlling the rotational speed of the external fan of the air conditioner according to claim 1, wherein the rotational speed adjustment amount is larger than a rotational speed error of the external fan.

## Patentansprüche

1. Eine Methode zum Steuern der Drehzahl eines externen Lüfters einer Klimaanlage, wobei die Klimaanlage einen Kompressor und einen Außentemperatursaugher ausst, der Außentemperatursaugher mit dem externen Lüfter ausgestattet ist, und die Methode zum Steuern der Drehzahl umfasst:
das Ermitteln eines Druckwerts der Kältemittelleitung zwischen dem Kompressor und dem Außentauscher nach dem Start des Außengebläses;
den Druckwert mit einem voreingestellten Druckschwellenwert vergleichen; und
selektiv die Drehzahl des externen Lüfters entsprechend dem Vergleichsergebnis um eine Drehzahlregelungsmenge erhöhen oder verringern.
wobei der voreingestellte Druckschwellwert basierend auf der Außentemperatur bestimmt wird,
**gekennzeichnet dadurch, dass** der Druckwert ein Hochdruckwert ist, wenn die Klimaanlage im Kühlmodus betrieben wird, der voreingestellte Druckschwellenwert ein voreingestellter Hochdruckschwellenwert ist, und der Schritt "die Drehzahl des externen Lüfters selektiv zu steuern, um die Drehzahl um die Drehzahlregelungsmenge zu erhöhen oder zu verringern, basierend auf dem Vergleichsergebnis" weiter umfasst:
Wenn der Hochdruckwert größer als der voreingestellte Hochdruck-Schwellenwert ist, dann wird die Drehzahl des externen Lüfters um die Drehzahlregelungsmenge erhöht; und
Wenn der Hochdruckwert kleiner als der voreingestellte Hochdruck-Schwellenwert ist, dann die Drehzahl des externen Lüfters um die Drehzahlanpassungsmenge verringern.
und die Methode umfasst weiterhin:
eine Abgastemperatur des Kompressors ermitteln;
Berechnung des Abgassuperheizgrads des Kompressors basierend auf der Abgastemperatur und dem voreingestellten Hochdruck-Schwellenwert;
beurteilen, welches der Abgassuperheizgrad oder die Schwellenwerte des Abgassuperheizgrads größer ist; und
das voreingestellte Hochdruck-Schwellenwert basierend auf dem Urteilsergebnis korrigieren;
oder
wobei der Druckwert bei Betrieb des Klimageräts im Heizmodus ein niedriger Druckwert ist, die voreingestellte Druckgrenze eine voreingestellte Niedrigruckgrenze ist und der Schritt "selektives Steuern der Drehzahl des Außenventilators, um basierend auf dem Vergleichsergebnis die Drehzahl um den Drehzahlregelungsbetrag zu erhöhen oder zu verringern" weiterhin umfasst:
Wenn der Niederdruckwert kleiner als der voreingestellte Niederdruckschwellwert ist, dann wird die Drehzahl des externen Lüfters um die Drehzahlanpassungsmenge erhöht; und
Wenn der Niedrigrückdruckwert größer als der voreingestellte Niedrigrückdruckschwellenwert ist, wird die Drehzahl des externen Lüfters um die Drehzahlregelungsmenge verringert.
und die Methode umfasst weiterhin:
die Saugtemperatur des Kompressors ermitteln;
Berechnung des Saugüberschusses des Kompressors basierend auf der Saugtemperatur und dem voreingestellten Niedrigrückdruck;
beurteilen, welcher von dem Saugüberschussgrad und einem Saugüberschussgrad-Schwellenwert größer ist; und
die voreingestellte Niederdruck-Schwellenwert basierend auf einem Urteilsergebnis korrigieren.

2. Die Methode zum Steuern der Drehzahl des externen Lüfters der Klimaanlage gemäß Anspruch 1, wobei nach dem Schritt "Drehzahl des externen Lüfters um die Drehzahlanpassungsmenge erhöhen" die Methode zum Steuern der Drehzahl weiterhin Folgendes umfasst:
beurteilen, ob die Drehzahl des externen Lüfters größer als seine maximale Drehzahl ist; und
Falls ja, den externen Lüfter auf die maximale Drehzahl einstellen.

3. Die Methode zum Steuern der Drehzahl des externen Lüfters der Klimaanlage gemäß Anspruch 1, wobei nach dem Schritt "Drehzahl des externen Lüfters um die Drehzahlanpassungsmenge verringern" die Methode zum Steuern der Drehzahl weiterhin umfasst:
beurteilen, ob die Drehzahl des externen Lüfters kleiner als seine Mindestdrehzahl ist; und
falls ja, den externen Lüfter so steuern, dass er mit der minimalen Drehzahl läuft.

4. Die Methode zum Steuern der Drehzahl des externen Lüfters der Klimaanlage gemäß Anspruch 1, wobei vor dem Start des externen Lüfters die Methode zum Steuern der Drehzahl weiterhin umfasst:
die anfängliche Drehzahl des externen Lüfters basierend auf der Außentemperatur bestimmen; und
den externen Lüfter entsprechend der anfänglichen Drehzahl starten.

5. Die Methode zum Steuern der Drehzahl des externen Lüfters der Klimaanlage gemäß Anspruch 1, wobei die Methode zum Steuern der Drehzahl vor dem Start des externen Lüfters weiterhin folgende Schritte umfasst:
die Raumtemperatur erfassen;
eine Differenz zwischen der Innenraumtemperatur und einer eingestellten Temperatur berechnen; und
Wenn die Differenz eine voreingestellte Bedingung erfüllt, wird der externe Lüfter gesteuert, um zu starten.

6. Die Methode zum Steuern der Drehzahl des externen Lüfters der Klimaanlage gemäß Anspruch 1, wobei die Drehzahlanpassungsmenge größer als der Drehzahlfehler des externen Lüfters ist.

## Revendications

1. Un procédé de contrôle de la vitesse de rotation du ventilateur extérieur du climatiseur, le climatiseur comprenant un compresseur et un échangeur de chaleur extérieur, l'échangeur de chaleur extérieur étant équipé du ventilateur extérieur, et la méthode de contrôle de la vitesse de rotation comprenant :
obtenir une valeur de pression du pipeline de réfrigérant entre le compresseur et l'échangeur de chaleur extérieur après le démarrage du ventilateur externe ;
comparer la valeur de pression avec un seuil de pression prédéfini ; et
contrôler sélectivement la vitesse de rotation du ventilateur externe pour l'augmenter ou la diminuer d'une quantité d'ajustement de vitesse de rotation en fonction d'un résultat de comparaison.
où le seuil de pression prédéfini est déterminé en fonction de la température ambiante extérieure,
**caractérisé en ce que** lorsque le climatiseur fonctionne en mode refroidissement, la valeur de pression est une valeur de pression élevée, le seuil de pression prédéfini est un seuil de pression élevé prédéfini, et l'étape de « contrôler sélectivement la vitesse de rotation du ventilateur externe pour augmenter ou diminuer d'une quantité d'ajustement de vitesse de rotation en fonction du résultat de la comparaison » comprend en outre :
si la valeur de haute pression est supérieure au seuil de haute pression prédéfini, alors régler la vitesse de rotation du ventilateur externe pour l'augmenter de la quantité d'ajustement de vitesse de rotation ; et
si la valeur de pression élevée est inférieure au seuil de pression élevée prédéfini, alors contrôler la vitesse de rotation du ventilateur externe pour la réduire de la quantité d'ajustement de vitesse de rotation,
et la méthode comprend en outre :
obtenir une température d'échappement du compresseur ;
calculer un degré de surchauffe d'échappement du compresseur en fonction de la température d'échappement et du seuil de pression élevée prédéfini ;
évaluer lequel des degrés de surchauffe des gaz d'échappement ou du seuil de surchauffe des gaz d'échappement est le plus élevé ; et
corrigeant le seuil de pression élevée prédéfini sur la base d'un résultat de jugement ;
ou
où lorsque le climatiseur fonctionne en mode chauffage, la valeur de pression est une valeur de basse pression, le seuil de pression prédéfini est un seuil de basse pression prédéfini, et l'étape de « contrôler sélectivement la vitesse de rotation du ventilateur externe pour l'augmenter ou la diminuer d'une quantité d'ajustement de vitesse de rotation en fonction du résultat de la comparaison » comprend en outre :
si la valeur de basse pression est inférieure au seuil de basse pression prédéfini, alors régler la vitesse de rotation du ventilateur externe pour l'augmenter de la quantité d'ajustement de vitesse de rotation ; et
si la valeur de basse pression est supérieure au seuil de basse pression prédéfini, alors régler la vitesse de rotation du ventilateur externe pour la réduire de l'amount d'ajustement de la vitesse de rotation,
et la méthode comprend en outre :
obtenir une température de refoulement du compresseur ;
calculer un degré de surchauffe d'aspiration du compresseur en fonction de la température d'aspiration et du seuil de basse pression prédéfini ;
déterminer lequel des degrés de surchauffe de la prise d'air et du seuil de surchauffe de la prise d'air est le plus élevé ; et
correction du seuil de basse pression prédéfini en fonction du résultat de jugement.

2. Le procédé de contrôle de la vitesse de rotation du ventilateur extérieur du climatiseur selon la revendication 1, dans lequel après l'étape de "contrôle de la vitesse de rotation du ventilateur extérieur pour l'augmenter d'une quantité d'ajustement de vitesse de rotation", le procédé de contrôle de la vitesse de rotation comprend en outre :
évaluer si la vitesse de rotation du ventilateur externe est supérieure à sa vitesse de rotation maximale ; et
si oui, contrôler le ventilateur externe pour qu'il fonctionne à la vitesse de rotation maximale.

3. Le procédé de contrôle de la vitesse de rotation du ventilateur extérieur du climatiseur selon revendication 1, dans lequel après l'étape de « contrôle de la vitesse de rotation du ventilateur extérieur pour la réduire d'une quantité d'ajustement de vitesse de rotation », le procédé de contrôle de la vitesse de rotation comprend en outre :
évaluer si la vitesse de rotation du ventilateur externe est inférieure à sa vitesse de rotation minimale ; et
si oui, contrôler le ventilateur externe pour qu'il fonctionne à la vitesse de rotation minimale.

4. Le procédé de contrôle de la vitesse de rotation du ventilateur extérieur du climatiseur selon la revendication 1, dans lequel avant que le ventilateur extérieur ne démarre, le procédé de commande de la vitesse de rotation comprend en outre :
déterminer une vitesse de rotation initiale du ventilateur externe en fonction de la température ambiante extérieure ; et
commander le ventilateur externe à démarrer en fonction de la vitesse de rotation initiale.

5. Le procédé de contrôle de la vitesse de rotation du ventilateur extérieur du climatiseur selon la revendication 1, dans lequel avant que le ventilateur extérieur ne démarre, le procédé de commande de la vitesse de rotation comprend en outre :
obtenir une température ambiante intérieure ;
calculer la différence entre la température ambiante intérieure et une température prédéfinie ; et
Si la différence satisfait une condition prédéfinie, alors contrôler le ventilateur externe pour qu'il démarre.

6. Le procédé de contrôle de la vitesse de rotation du ventilateur extérieur du climatiseur selon la revendication 1, dans lequel la quantité d'ajustement de la vitesse de rotation est supérieure à l'erreur de vitesse de rotation du ventilateur extérieur.
